(19) **Europäisches Patentamt / European Patent Office / Office européen des brevets**

(11) **EP 4 707 196 A1**

(12) **EUROPEAN PATENT APPLICATION**
published in accordance with Art. 153(4) EPC

(43) Date of publication:
**11.03.2026 Bulletin 2026/11**

(21) Application number: **23935787.4**

(22) Date of filing: **30.11.2023**

(51) International Patent Classification (IPC):
**B65D 65/40** (2006.01)    **B32B 27/32** (2006.01)

(52) Cooperative Patent Classification (CPC):
**B32B 7/12; B32B 27/00; B32B 27/32; Y02W 30/80**

(86) International application number:
**PCT/JP2023/042987**

(87) International publication number:
**WO 2024/228276 (07.11.2024 Gazette 2024/45)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.05.2023 JP 2023075730**

(71) Applicant: **Toppan Holdings Inc.
Tokyo 110-0016 (JP)**

(72) Inventors:
• **SUZUTA Masayoshi**
**Tokyo 110-0016 (JP)**
• **IMAI Nobuhiko**
**Tokyo 110-0016 (JP)**
• **KATO Chiaki**
**Tokyo 110-0016 (JP)**
• **HATA Soichi**
**Tokyo 110-0016 (JP)**
• **NAKAMURA Ryuichi**
**Tokyo 110-0016 (JP)**
• **SUZUKI Katsuhiro**
**Tokyo 110-0016 (JP)**

(74) Representative: **Hoffmann Eitle
Patent- und Rechtsanwälte PartmbB
Arabellastraße 30
81925 München (DE)**

(54) **PRINTING SUBSTRATE, LAMINATE FOR PACKAGING MATERIAL, PACKAGING CONTAINER, AND PACKAGING ARTICLE**

(57)    The print substrate includes a substrate and a printed layer formed thereon. The substrate is a polyolefin resin film containing recycled resin, and the recycled resin is a chemically recycled resin. A packaging material laminate includes the print substrate and a sealing layer.

FIG.1

EP 4 707 196 A1

**Description**

[Title of the Invention]

PRINT SUBSTRATE, PACKAGING MATERIAL LAMINATE, PACKAGING CONTAINER, AND PACKAGED ARTICLE

[Technical Field]

The present disclosure relates to a print substrate, a packaging material laminate, a packaging container, and a packaged article.

[Background Art]

Packaging materials used for packaging containers such as packaging bags are required to have various properties depending on the application. In order to satisfy such various performance requirements at the same time, packaging materials are generally made of a laminate including a substrate and a sealant layer.

A known conventional example of such a packaging material laminate includes a first layer including an inner liner and a second layer including an outer sheath, in which the outer sheath is made of a post-consumer resin (hereinafter also referred to as "PCR") that may contain contaminants such as paper, ink, and food residues, and each layer structure includes a print film (see, for example, PTL 1 below). As another known example of a packaging material laminate, a laminated film includes at least a recycled polyethylene layer and a linear low-density polyethylene layer, in which the recycled polyethylene layer contains 20% by mass or more of mechanically recycled polyethylene relative to the total mass of the recycled polyethylene layer, and has a printed layer on the recycled polyethylene layer (see, for example, PTL 2).

[Citation List]

[Patent Literature]

[PTL 1] JP 2022-552096 T
[PTL 2] JP 2023-040660 A

[Summary of the Invention]

[Technical Problem]

However, when the PCR is a recycled resin containing contaminants, that is, a so-called mechanically recycled resin, and the PCR content is high, the laminate described in PTL 1 specified above raises the following problems. To be specific, in the laminate described in PTL 1 above, foreign matter such as impurities, gels, and aggregates may appear on the surface of the outer sheath. Therefore, when the laminate has a print film on the surface of the outer sheath, there is room for improvement in terms of print appearance.

Furthermore, since the laminated film described in PTL 2 has a printed layer on the recycled polyethylene layer, foreign matter may be present on the surface of the recycled polyethylene layer that contains mechanically recycled polyethylene. This foreign matter forms protrusions, causing the surface of the recycled polyethylene layer to have asperities. When a printed layer is provided on the asperities on the surface of the recycled polyethylene layer, the protrusions formed by the foreign matter prevent the ink from adhering to the surface, resulting in a defective printed layer with areas of missing print, that is, missing characters. In particular, a printed layer with a low dot density is likely to have missing characters. Therefore, the laminated film described in PTL 2 has room for improvement in terms of the surface condition of the printed layer provided on the surface of the recycled polyethylene layer, that is, in terms of print appearance.

An object of the present disclosure is to provide a print substrate, a packaging material laminate, a packaging container, and a packaged article that can achieve a good print appearance even when a substrate containing recycled resin is used.

[Solution to Problem]

An aspect of the present disclosure provides a print substrate formed by forming a printed layer on a substrate, in which the substrate is a polyolefin resin film containing recycled resin, and the recycled resin is a chemically recycled resin.

According to the print substrate, the recycled resin used for the substrate of the print substrate is a chemically recycled resin, and the chemically recycled resin is produced by first breaking down discarded resin into low molecular weight compounds through a process depending on the material characteristics, such as a process of converting discarded resin into monomers, by gasification or liquefaction, and subsequent refining into naphtha, or a process of converting discarded resin into monomers, by depolymerization, and then polymerizing the monomers. Therefore, chemically recycled resin is less likely to be contaminated with foreign matter such as impurities, gels, and aggregates than mechanically recycled resin, which is produced by cleaning and crushing resin products such as collected used packaging materials, then heating and melting them to regenerate raw materials. In addition, unlike mechanically recycled resin, chemically recycled resin is not subjected to heat treatments such as heating and melting after the recycling process, which allows it to be less susceptible to thermal degradation and reduces the amount of foreign matter such as gels and aggregates on the surface. Therefore, protrusions due to foreign matter are less likely to be formed on the surface of the substrate, and asperities are less likely to be formed. When the printed layer is formed on such a substrate, defects in the printed layer, such as areas of missing print, or missing characters, are less likely to occur. In particular, a printed layer with a low dot density is less likely to have missing characters. In addition, variation in the thickness of the printed layer caused by foreign matter is suppressed. Therefore, according to the print substrate described above, a good print appearance can be achieved even when a substrate containing recycled resin is used.

Another aspect of the present disclosure provides a packaging material laminate including the print substrate and a sealing layer.

The packaging material laminate can achieve a good print appearance even when using a print substrate formed by forming a printed layer on a substrate containing recycled resin.

The content of the recycled resin in the packaging material laminate may be 10% or more by volume or by mass.

The higher the content (usage ratio) of recycled resin in the packaging material laminate, the more the environmental impact can be reduced. The content of recycled resin in the packaging material laminate is generally 10% or more by volume or by mass, preferably 20% or more by volume or by mass, more preferably 25% or more by volume or by mass, even more preferably 30% or more by volume or by mass, and particularly preferably 40% or more by volume or by mass. In cases where it is not easy to calculate the mass ratio (% by mass) after the packaging material laminate has been processed into a packaging material, the recycled resin content may be expressed in "% by volume" so that it can be calculated based on the film thickness ratio. In other words, it is possible to use the ratio of the film thickness of the layer containing recycled resin to the thickness of the entire laminate as the content (% by volume) of the recycled resin. The densities of polyethylene and polypropylene, which make up the majority of packaging materials are approximately 0.86 to 0.97 $g/cm^3$, and the numerical ranges for recycled resin content specified in % by volume are generally also satisfied by values specified in % by mass.

The packaging material laminate may further include an intermediate substrate between the substrate and the sealing layer.

In this case, the intermediate substrate reinforces the substrate, thereby further improving the strength of the laminate.

In the packaging material laminate, the recycled resin may be a post-consumer recycled resin (PCR).

Since a large amount of PCR is available on the market, the cost of the laminate can be reduced.

The recycled resin may be a combination of PCR and post-industrial recycled resin (PIR).

In the packaging material laminate, the sealing layer may be a sealant film or a heat-sealing varnish layer.

In the packaging material laminate, the substrate and the intermediate substrate may be bonded together with a solvent-free adhesive.

In the packaging material laminate, the substrate or the intermediate substrate may further include a gas barrier layer.

In this case, the gas barrier performance of the laminate can be further improved. Therefore, when a packaging container is produced using the laminate and contents are placed in the packaging container, deterioration of the contents due to gases such as oxygen can be effectively suppressed.

Another aspect of the present disclosure provides a packaging container obtained using the above packaging material laminate.

According to the packaging container, as described earlier, the chemically recycled resin contained in the substrate of the laminate is less likely to be contaminated with foreign matter such as impurities, gels, and aggregates than mechanically recycled resin. In addition, unlike mechanically recycled resin, chemically recycled resin is not subjected to heat treatments such as heating and melting after the recycling process, which allows it to be less susceptible to thermal degradation and reduces the amount of foreign matter such as gels and aggregates on the surface of the substrate. Therefore, even when a printed layer is formed on such a substrate, variation in the thickness of the printed layer due to foreign matter is suppressed. As a result, according to the packaging container, a good print appearance can be achieved even when a laminate including a substrate containing recycled resin is used.

Yet another aspect of the present disclosure provides a packaged article including the above packaging container and contents contained in the packaging container.

According to the packaged article, as described earlier, the chemically recycled resin contained in the substrate of the laminate is less likely to be contaminated with foreign matter such as impurities, gels, and aggregates than mechanically recycled resin. **In** addition, unlike mechanically recycled resin, chemically recycled resin is not subjected to heat treatments such as heating and melting after the recycling process, which allows it to be less susceptible to thermal degradation and reduces the amount of foreign matter such as gels and aggregates on the surface of the substrate. Therefore, even when a printed layer is formed on such a substrate, variation in the thickness of the printed layer due to foreign matter is suppressed. Therefore, according to the above packaged article, a good print appearance can be achieved even when a laminate including a substrate containing recycled resin is used.

[Advantageous Effects of the Invention]

According to the present disclosure, a print substrate, a packaging material laminate, a packaging container, and a packaged article are provided that can achieve a good print appearance even when a substrate containing recycled resin is used.

[Brief Description of the Drawings]

Fig. 1 is a schematic cross-sectional view illustrating an embodiment of a packaging material laminate according to the present disclosure.
Fig. 2 is a schematic cross-sectional view illustrating another embodiment of a packaging material laminate according to the present disclosure.
Fig. 3 is a schematic cross-sectional view illustrating another embodiment of a packaging material laminate according to the present disclosure.
Fig. 4 is a schematic cross-sectional view illustrating an embodiment of a packaged article according to the present disclosure.

[Description of the Embodiments]

Preferred embodiments of the present disclosure are described in detail below. Throughout the drawings, the same or corresponding components are denoted by the same reference signs, and duplicated description is omitted.

<<Packaging Material Laminate>>

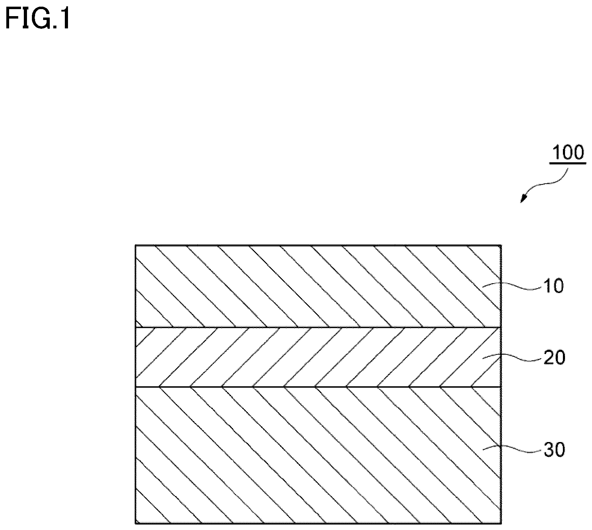

First, embodiments of packaging material laminates according to the present disclosure will be described with reference to Figs. 1 to 3. Figs. 1 to 3 are schematic cross-sectional views showing various embodiments of packaging material laminates according to the present disclosure.

As shown in Fig. 1, a packaging material laminate (hereinafter also referred to as "laminate") 100 includes a print substrate 10 and a sealing layer 30.

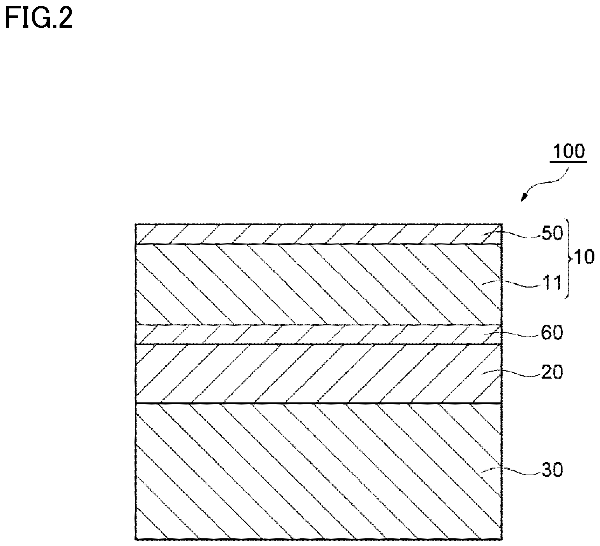

As shown in Fig. 2, the print substrate 10 is formed by forming a printed layer 50 on a substrate 11. Here, the substrate 11 is a polyolefin resin film containing recycled resin, and the recycled resin is a chemically recycled resin.

The laminate 100 may further include an intermediate substrate 20 between the print substrate 10 and the sealing layer 30.

As shown in Fig. 2, the laminate 100 may further include a gas barrier layer 60.

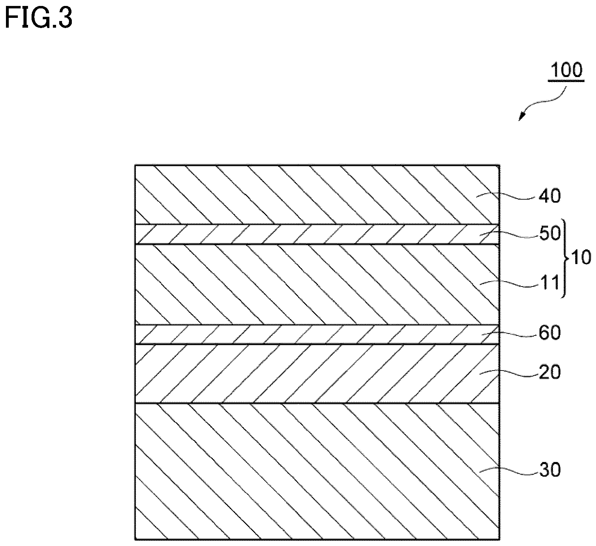

When the laminate 100 is used for a tube container, as shown in Fig. 3, the laminate 100 may further include a second sealant layer 40 on the opposite side of the print substrate 10 to the sealing layer 30.

According to the laminates 100 described above, a good print appearance can be achieved even when a substrate containing recycled resin is used.

The content of recycled resin in the packaging material laminate 100 is preferably 10% or more by volume or by mass.

<Print Substrate>

The print substrate 10 is a member formed by forming the printed layer 50 on the substrate 11.

(Substrate)

The substrate 11 is made of a polyolefin resin film containing recycled resin, and the recycled resin is a chemically recycled resin.

The polyolefin resin film includes a polyolefin resin. Examples of polyolefin resins include polyethylene and polypropylene.

Polyethylene is a resin that includes ethylene as a structural unit. Polyethylene includes ethylene homopolymers and copolymers of ethylene with other monomers. The proportion of ethylene in the polyethylene is, for example, 80 mol% or more.

Examples of the other monomers include α-olefins, vinyl acetate, and acrylic esters.

The α-olefins may be those having 3 to 20 carbon atoms. Examples of the α-olefins include propylene, 1-butene, 1-pentene, 1-hexene, 1-octene, 1-decene, 1-dodecene, 1-tetradecene, 1-hexadecene, 1-octadecene, 1-eicosene, 3-methyl-1-butene, 4-methyl-1-pentene, and 6-methyl-1-heptene.

Examples of polyethylene include high-density polyethylene (HDPE), medium-density polyethylene (MDPE), low-density polyethylene (LDPE), linear low-density polyethylene (LLDPE), very low-density polyethylene (VLDPE), ethylene-vinyl acetate copolymers, ionomer resins, ethylene-acrylic acid copolymers, ethylene-methyl acrylate copolymers, ethylenemethacrylic acid copolymers, and ethylene-propylene copolymers. These can be used alone or in combinations of two or more.

Polypropylene is a resin containing propylene as a structural unit. It does not necessarily contain ethylene as a structural unit, and includes both propylene homopolymers and copolymers with ethylene or various α-olefins. Examples of polypropylene include homopolypropylene, block polypropylene, and random polypropylene.

The polyolefin resin may be a non-recycled polyolefin resin, a chemically recycled polyolefin resin, or a mixture thereof.

The non-recycled polyolefin resin may be a petroleum-derived polyolefin resin obtained using a petroleum-derived monomer as a raw material, a biomass-derived polyolefin resin obtained using a biomass-derived monomer as a raw material, or a mixture thereof. From the perspective of reducing the environmental impact, a biomass-derived polyolefin resin is preferable.

The chemically recycled polyolefin resin may contain a single chemically recycled polyolefin resin or a mixture of a plurality of types of chemically recycled polyolefin resins.

The substrate 11 may have a single-layer structure or a multilayer structure. In the case of a multilayer structure, the substrate 11 has a layer structure including two or more layers, and at least one of the layers contains a chemically recycled resin.

If necessary, the substrate 11 may be a layer obtained by forming a multilayer film by coextrusion of a layer made of an ethylene-vinyl alcohol copolymer and a layer made of a polyamide with an adhesive resin or the like, and stretching the formed film. For example, a three-material, five-layer substrate consisting of chemically recycled resin/adhesive resin/ethylene-vinyl alcohol copolymer/adhesive resin/chemically recycled resin; a three-material, three-layer substrate consisting of chemically recycled resin/adhesive resin/ethylene-vinyl alcohol copolymer; or a multilayer substrate consisting of petroleum-derived (natural) resin/chemically recycled resin/petroleum-derived (natural) resin or petroleum-derived (natural) resin/another polyolefin/chemically recycled resin/another resin/petroleum-derived (natural) resin may be used. In the multilayer substrate 10, materials of the same type may have different specific gravities depending on their functions.

The substrate 11 may further contain additives such as fillers, antistatic agents, plasticizers, lubricants, light-shielding pigments, and antioxidants, as necessary.

When the substrate 11 contains a light-shielding pigment, the substrate 11 can function as a light-shielding layer.

The substrate 11 may be either a non-stretched film or a stretched film. The stretched film may be either uniaxially or biaxially stretched. The substrate 11 may be made of either a stretched film or an unstretched film. When the substrate 11 is uniaxially stretched, it is possible to improve properties such as ease of tearing and heat resistance of the laminate 100. When the substrate 11 is a biaxially stretched film, it is possible to improve properties such as mechanical strength and dimensional stability of the laminate 100.

When an adhesive layer is provided on the surface of the substrate 11, in order to enhance adhesion to the adhesive layer, the surface of the substrate 11 on the adhesive layer side may be subjected to various pretreatments such as corona treatment, plasma treatment, ozone treatment, and flame treatment, or an adhesion-enhancing layer or another coating layer may be provided thereon.

Although the thickness of the substrate 11 is not particularly limited, for example, it is 10 μm or more and 100 μm or less. In order to reduce the amount of material to lower environmental impact and obtain good heat resistance, impact resistance, and gas barrier performance, the thickness of the substrate 11 may be 15 μm or more, 20 μm or more, 25 μm or more, 30 μm or more, or 40 μm or more. In addition, the thickness of the substrate 11 may be 60 μm or less, or 50 μm or less.

(Printed Layer)

As shown in Fig. 2 or 3, the printed layer 50 may be provided between layers in the laminate 100, or may be provided on the outer side. When the printed layer 50 is provided between layers, for example, the printed layer 50 is provided on a surface opposite to the sealing layer 30 side (outer surface) as shown in Fig. 2 or 3. The printed layer 50 may be provided on the surface of an outer layer substrate 10 on the sealing layer 30 side (inner surface). When the printed layer 50 is provided on the inner surface of the outer layer substrate 10, deterioration of the printed layer 50 can be prevented because it is protected by the outer layer substrate 10. When the printed layer 50 is provided on the outer surface of the outer layer substrate 10 and serves as the outermost layer of the laminate 100, the printed layer 50 can be easily removed when recycling a discarded packaging body containing the laminate 100. Furthermore, when the laminate 100 includes an intermediate substrate 20 as shown in Fig. 2 or 3, the printed layer 50 may be provided on the intermediate substrate 20. The printed layer 50 may be provided between the outer layer substrate 10 and the intermediate substrate 20 as shown in Fig. 2 or 3, or may be provided between the intermediate substrate 20 and the sealing layer 30.

When the laminate 100 includes a second sealant layer 40, the printed layer 50 may be provided on the second sealant layer 40. When the printed layer 50 is provided on the second sealant layer 40, by providing it on the surface of the second sealant layer 40 opposite the outer layer substrate 10 (outer surface), it can be easily removed when recycling a discarded packaging body containing the laminate 100.

The printed layer 50 displays characters, patterns, or the like, and can be formed using ink.

Examples of inks include those obtained by adding various pigments, plasticizers, drying agents, stabilizers, and the like to binder resins such as urethane-, acrylic-, nitrocellulose-, or rubber-based resins.

The ink may be either a water-based ink or an oil-based ink, but is preferably a water-based ink. The use of a water-based ink further reduces the environmental impact because it uses water or alcohol as the solvent. In particular, when the adhesive is a solvent-free adhesive, the environmental impact can be significantly reduced by using a water-based ink. Furthermore, the ink may or may not be a biomass ink, but is preferably a biomass ink from the perspective of reducing the environmental impact. Here, biomass ink refers to ink containing ingredients derived from biological resources (biomass) such as cotton, pulp, rice bran, vegetable oil, and angiosperm seeds.

The ink may be recycled ink obtained by collecting and recycling used ink, or may be non-recycled ink. Recycled ink is preferable in terms of environmental impact.

It is also possible to use an easily recyclable ink as the ink. The use of an easily recyclable ink facilitates recycling of a discarded packaging body including the laminate 100. A specific example of an easily recyclable ink is "SunSpectro Solvawash" manufactured by DIC Corporation.

<Sealing Layer>

The sealing layer 30 is bonded to itself or another sealing layer 30 by applying heat and pressure when the laminate 100 is used to manufacture a packaging container such as a packaging bag, and it can be a sealant film or a heat-sealing varnish layer can be used.

The sealing layer 30 preferably has a melting point lower than that of the substrate 11 provided on the outer side. This makes it possible to heat-seal the sealing layer 30 during heat-sealing of the laminate 100 while suppressing melting of the substrate 11. Furthermore, the substrate 11 and the seal layer 30 can be easily separated by heating the laminate 100, facilitating mechanical recycling of the substrate 11 and the sealing layer 30.

The sealing layer 30 may further contain additives such as flame retardants, slip agents, antiblocking agents, antioxidants, photostabilizers, tackifiers, antistatic agents, and light-shielding pigments, as necessary.

When the sealing layer 30 contains a light-shielding pigment, the sealing layer 30 can function as a light-shielding layer.

The sealing layer 30 may be composed of a single layer or a plurality of layers.

When the sealing layer 30 is composed of a single layer, the sealing layer 30 may be a recycled polyolefin resin film containing recycled resin, or a non-recycled polyolefin resin film. The recycled polyolefin resin film is preferably a chemically recycled polyolefin resin because it has better hygiene and quality characteristics.

When the sealing layer 30 is composed of three layers, the layers may be a first outer layer, an intermediate layer, and a second outer layer.

The first and second outer layers may be each made of a non-recycled polyolefin resin film, and the intermediate layer may be made of a recycled polyolefin resin film.

The sealing layer 30 may be colored, for example, white. For example, a white sealant containing a titanium oxide-based white pigment can be used. The sealing layer 30 is not limited to a white sealant, and a sealing layer of another color may be formed by adding a pigment other than a white pigment.

(Sealant Film)

The sealant film may be a polyolefin resin film or a polyester resin film. Polyolefin resin film is suitable due to its properties such as suitability for sealing, and contains a polyolefin resin. The polyolefin resin may be similar to that used in the substrate 11. The polyester resin film may contain a copolymer polyester obtained by copolymerizing two or more types of copolymers. Such a polyester resin film is preferable due to its low adsorption of ingredients from the contents and good flavor barrier performance.

The thickness of the sealant film is not particularly limited and is appropriately adjusted depending on, for example, the application of the laminate 100. For example, the thickness of the sealant film may be 10 μm or more, 25 μm or more, 30 μm or more, 40 μm or more, or 50 μm or more. The thickness of the sealant film may be 100 μm or less, 80 μm or less, 60 μm or less, or 50 μm or less.

(Heat-Sealing Varnish Layer)

The heat-sealing varnish layer can be used for light packaging applications, mainly containing light snacks. The heat-sealing varnish layer is obtained by applying an acrylic-, elastomer- or olefin-based heat-sealing varnish and drying it. The heat-sealing varnish may be a dispersion of a heat-sealing varnish component in an aqueous solvent (for example, water). Examples of heat-sealing varnishes that can be used include acrylic resin emulsions obtained by dispersing acrylic resin in an aqueous solvent as a heat-sealing varnish component, styrene-acrylic emulsions obtained by dispersing styrene-acrylic copolymer resin in an aqueous solvent as a heat-sealing varnish component, ionomer-based emulsions obtained by dispersing ionomer in an aqueous solvent as a heat-sealing varnish component, and polyolefin-based emulsions obtained by dispersing polyolefin resin in an aqueous solvent as a heat-sealing varnish component. In particular, among polyolefin-based emulsions, it is preferable to use an aqueous heat-sealing varnish obtained by dispersing an aqueous polyolefin resin having at least one selected from a carboxyl group, a salt of a carboxyl group, a carboxylic anhydride group, and a carboxylic acid ester as a heat-sealing varnish component in an aqueous solvent.

Specific examples of heat-sealing varnishes that can be used include A450NS (acrylicbased) manufactured by DIC Corporation and CHEMIPEARL S (polyolefin-based) manufactured by Mitsui Chemicals, Inc.

The thickness of the heat-sealing varnish layer may be, for example, 0.05 μm or more, 0.5 μm or more, or 1 μm or more and 20 μm or less, 10 μm or less, or 5 μm or less. The heat-sealing varnish layer preferably has a thickness of 1 to 5 μm. This makes it possible to achieve both sufficient heat seal strength and resistance to bending.

<Second Sealant Layer>

The second sealant layer 40 may be similar to the sealing layer 30 described above.

The thickness of the second sealant layer 40 may be the same as or different from that of the sealing layer 30. Similarly, the material of the second sealant layer 40 may be the same as or different from that of the sealing layer 30.

<Intermediate Substrate>

The intermediate substrate 20 is a substrate that reinforces the print substrate 10 and can further improve the strength of the laminate 100.

The intermediate substrate 20 may be a film substrate made of a resin material. Examples of the resin material include polyester films such as polyethylene terephthalate (PET) and polyethylene naphthalate (PEN) films; polyolefin resins such as polyethylene, polypropylene, and cyclic olefin copolymers (COCs) and COPs; polystyrene; polyamides such as nylon 66; polycarbonate; polyacrylonitrile; polyimide; and other engineering plastics. The resin material is preferably one having mechanical strength and dimensional stability. The resin material is processed into a film and used as a film substrate. The film substrate may be either a non-stretched film or a stretched film.

The intermediate substrate 20 may be a single layer or a laminate of a plurality of layers.

When the intermediate substrate 20 is composed of a single layer, the intermediate substrate 20 may be a recycled resin film, or may be a non-recycled resin film made of petroleum-derived resin, biomass-derived resin, or the like.

When the intermediate substrate 20 is composed of a plurality of layers, all of the layers may be recycled resin films or non-recycled resin films, or some of the layers may be non-recycled resin films and the remaining layers may be recycled resin films.

When it is composed of three layers, the layers may be a first outer layer, an intermediate layer, and a second outer layer.

The first and second outer layers may be each made of a non-recycled resin film, and the intermediate layer may be made of a recycled resin film. This further reduces the risk of impurities, gels, agglomerates, and other foreign matter migrating from the intermediate substrate 20 to the contents through the sealing layer 30 as a result of heating during retort or boiling treatment of a packaging bag. Therefore, the laminate 100 can be used safely for packaging contents such as food.

The thickness of the intermediate substrate 20 is not particularly limited and is appropriately adjusted depending on, for example, the application of the laminate 100. For example, the thickness of the intermediate substrate 20 may be 10 $\mu$m or more, 25 $\mu$m or more, 30 $\mu$m or more, 40 $\mu$m or more, or 50 $\mu$m or more. The thickness of the intermediate substrate 20 may be 100 $\mu$m or less, 80 $\mu$m or less, 60 $\mu$m or less, or 50 $\mu$m or less.

<Adhesive Layer>

The adhesive layer may be an adhesive layer formed using an adhesive or an adhesive layer containing adhesive resin (hereinafter, also referred to as an "adhesive resin layer").

Examples of the adhesive include known adhesives such as urethane-based adhesives, polyester-based adhesives, polyamide-based adhesives, epoxy-based adhesives, and isocyanatebased adhesives.

The adhesive may or may not contain a biomass-derived component, but from the perspective of reducing the environmental impact, the adhesive preferably contains a biomass-derived component. Specific examples of the biomass-derived component include the "DICDRY BM series" manufactured by DIC Corporation and the "ECOAD series" manufactured by TOYO INK CO., LTD.

The adhesive may or may not contain an organic solvent, but from the perspective of reducing the environmental impact, it is preferably an adhesive that does not contain an organic solvent (solvent-free adhesive).

The adhesive resin layer may be an extruded or non-extruded resin layer.

The adhesive resin suffices if it is a heat-sealable adhesive thermoplastic resin that can be melted and fused by heat, and examples thereof include, among other resins, acid-modified polyolefin-based resins obtained by modifying a polyolefin-based resin with an unsaturated carboxylic acid. Examples of the polyolefin-based resin include low-density polyethylene, medium-density polyethylene, high-density polyethylene, straight-chain (linear) low-density polyethylene, polypropylene, ethylene-propylene copolymer, methylpentene polymer, polyethylene, and polypropylene. Examples of the unsaturated carboxylic acid include acrylic acid, methacrylic acid, maleic acid, maleic anhydride, fumaric acid, and itaconic acid.

The thickness of the adhesive layer is not particularly limited and may be, for example, 1 $\mu$m or more. When the thickness of the adhesive layer is 1 $\mu$m or more, sufficient adhesive strength can be achieved. The thickness of the adhesive layer may be 2 $\mu$m or more.

The thickness of the adhesive layer may be 50 $\mu$m or less, 5 $\mu$m or less, or 3 $\mu$m or less.

<Gas Barrier layer>

The laminate 100 may include a gas barrier layer 60 together with the printed layer 50 as shown in Fig. 2 or 3. The gas barrier layer 60 may be provided on at least one surface of the substrate 11. Furthermore, when the laminate 100 includes the intermediate substrate 20, the gas barrier layer 60 may be provided on at least one surface of the intermediate substrate 20, as shown in Fig. 2 or 3.

The gas barrier layer 60 improves the gas barrier performance of the laminate 100.

The gas barrier layer 60 provides a barrier against a gas such as water vapor or oxygen.

The gas barrier layer 60 may be, for example, a vapor-deposited layer such as a metal vapor-deposited layer a vapor-deposited layer of an inorganic compound.

Examples of the metal include aluminum and silicon.

Examples of inorganic oxides include aluminum oxide and silicon oxide (silica).

When the gas barrier layer 60 is a vapor-deposited layer of a metal such as aluminum, the gas barrier layer 60 can function as a light-shielding layer.

The gas barrier layer 60 may further include an overcoat layer on the vapor-deposited layer. The overcoat layer may be a coating layer obtained using a composition containing a watersoluble polymer and silicon alkoxide, or a coating layer made of a resin such as polyurethane.

<Other Layers>

The laminate 100 may further include a layer containing a non-polyolefin resin.

Examples of the non-polyolefin resin include polyamide resins such as nylon, and polyester resins such as polyethylene terephthalate (PET).

(Laminate)

(A) Recycled resin content

**In** the laminate 100, the recycled resin content in the laminate 100 is preferably 10% or more by volume or by mass.

Note that, when the recycled resin content in a polyolefin resin film containing recycled resin is 100% by volume (100% by mass), the recycled resin content in the laminate 100 can be calculated as the ratio of the total thickness of the film to the total thickness of the laminate 100. However, when the recycled resin content in a polyolefin resin film containing recycled resin is X% by mass (less than 100% by mass) and the thickness of the film is Y1 ($\mu$m), the thickness Y2 ($\mu$m) of the film is calculated as X/100 $\times$ Y1 ($\mu$m) for the recycled resin content.

The recycled resin content in the laminate 100 is preferably 20% or more by volume or by mass, more preferably 25% or more by volume or by mass, even more preferably 30% or more by volume or by mass, and particularly preferably 40% or more by volume or by mass.

In the present disclosure, the recycled resin is a chemically recycled resin and does not include mechanically recycled resin.

The chemically recycled resin may be a post-consumer recycled resin (PCR), a post-industrial recycled resin (PIR), or a mixture thereof, but is preferably a PCR. Since a large amount of PCR is available on the market, if the chemically recycled resin is PCR, the cost of the laminate 100 can be reduced.

(B) Odor components

In a total ion chromatogram obtained by subjecting the laminate 100 to mass analysis using purge-and-trap gas chromatography-mass spectrometry, when the odor component indicators, that is, the ratio of the peak area of nonanal to the sum of the peak area values of all aliphatic hydrocarbon components is denoted as R1 (%) and the ratio of the peak area of decanal to the sum of the peak area values of all aliphatic hydrocarbon components is denoted as R2 (%), R1 is preferably less than 1.5%, more preferably 1.0% or less, and particularly preferably 0.5% or less.

Furthermore, R2 is preferably less than 3.5%, more preferably 2.5% or less, and particularly preferably 1.5% or less.

It is preferred that R1 is less than 1.5% and R2 is less than 3.5%. In that case, overall thermal degradation is suppressed in the laminate 100, and the quality of the laminate 100 can be further improved.

Specifically, the above mass analysis is carried out by cutting out a 1.0 g sample from the laminate 100, placing this sample in a 20 mL vial together with a collector for odor components, heating it at 60°C for 1 hour to adsorb volatile components from the sample onto the collector, and then analyzing the volatile components adsorbed onto the collector using a purge-and-trap gas chromatograph mass analyzer.

(C) Fisheyes

Fisheyes refer to pieces of foreign matter such as spots (gelled matter) or carbonized matter that resemble fish eyes and are found on film. Films having fisheyes with a diameter of 1 mm or more are deemed defective, and the number of fisheyes with a diameter of 0.5 mm or more and less than 1 mm should be 100 per m$^2$ or less, more preferably 50 per m$^2$ or less, and particularly preferably 10 per m$^2$ or less.

(D) Variation in dynamic friction force

Variation (in-plane variation) $\sigma$ in the dynamic friction force across the surface of the print substrate 10 of the laminate 100 refers to the standard deviation of the dynamic friction force.

The value of $\sigma$ is preferably less than 0.45, more preferably less than 0.35, and particularly preferably less than 0.2. When $\sigma$ is less than 0.45, the transportability of the laminate 100 can be improved when it is transported with the layer having $\sigma$ of less than 0.45 facing the transport rollers. Furthermore, the difference in stress between areas on the surface of the layer where the dynamic friction force from the transport rollers is large and areas where it is small decreases, thereby reducing residual distortion within the layer and suppressing a decrease in the strength of the laminate 100 due to the residual distortion.

From the perspective of the strength of the laminate, $\sigma$ is preferably 0.1 or more, more preferably 0.2 or more, and particularly preferably 0.3 or more.

The dynamic friction coefficient of the laminate 100 is measured using the multi-function static and dynamic friction measuring instrument TL201Tt (manufactured by Trinity Lab) and a tactile probe. The standard deviation $\sigma$ of dynamic friction force is a value obtained based on JIS K 7125-ISO 8295, and specifically, it is obtained by placing the laminate 100 on a test table with the print substrate 10 facing down, and bringing the tactile probe into contact with the laminate 100 and sliding it at a speed of 10 mm/sec under a load of 50 g.

(F) Impurities

When the laminate 100 is analyzed by Fourier transform infrared spectroscopy (FT-IR) using attenuated total reflection (ATR) to obtain an ATR spectrum, a ratio R3 of the absorption coefficient of the C=O stretching near 1720 cm$^{-1}$, corresponding to polyester and polyurethane, to the absorption coefficient of the methylene group C-H asymmetric stretching near 2915 cm$^{-1}$, corresponding to polyethylene, in the ATR spectrum is preferably less than 0.1, more preferably less than 0.05, and particularly preferably 0.01 or less. The ratio R3 serves as an indicator showing that the amount of resin components other than polyolefin is small.

In the above analysis, a diamond prism is used as the prism to be brought into close contact with the laminate 100, and the angle of incidence with respect to the surface of the laminate 100 is 45°.

When the laminate 100 includes the substrate 10 and the sealing layer 30, both the substrate 10 and the sealing layer 30 may be recycled resin films.

<<Packaged Article>>

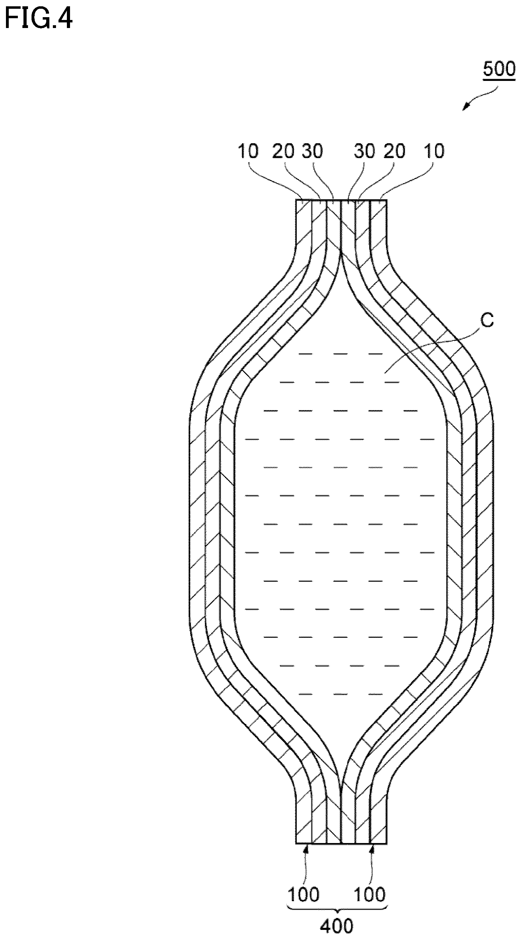

Next, an embodiment of a packaged article according to another aspect of the present disclosure will be described with reference to Fig. 4. Fig. 4 is a cross-sectional view illustrating an embodiment of a packaged article according to another aspect of the present disclosure.

As shown in Fig. 4, a packaged article 500 includes a packaging bag 400 as a packaging container and contents C contained in the packaging bag 400. The packaging bag 400 is obtained by using a pair of laminates 100. The packaging bag 400 is obtained, for example, by making the sealing layers 30 of the pair of laminates 100 face each other and bonding their peripheral edges. The packaging bag 400 includes a storage portion for containing the contents C and a bonded portion provided around the storage portion. The bonded portion is a portion where the sealing layers 30 of the opposing laminates 100 are bonded together, and the storage portion is a portion where the sealing layers 30 of the opposing laminates 100 are not bonded together.

According to the packaged article 500, the chemically recycled resin contained in the substrate 11 of the laminate 100 as recycled resin is produced by first breaking down discarded resin into low molecular weight compounds through a process depending on the material characteristics, such as a process of converting discarded resin into monomers, by gasification or liquefaction, and subsequent refining into naphtha, or a process of converting discarded resin into monomers, by depolymerization, and then polymerizing the monomers. Therefore, chemically recycled resin is less likely to be contaminated with foreign matter such as impurities, gels, and aggregates than mechanically recycled resin, which is produced by cleaning and crushing resin products such as collected used packaging materials, then heating and melting them to regenerate raw materials. In addition, unlike mechanically recycled resin, chemically recycled resin is not subjected to heat treatments such as heating and melting after the recycling process, which allows it to be less susceptible to thermal degradation and reduces the amount of foreign matter such as gels and aggregates on the surface of the substrate 11. Therefore, protrusions due to foreign matter are less likely to be formed on the surface of the substrate 11, and asperities are less likely to be formed. When the printed layer 50 is formed on such a substrate 11, defects in the printed layer 50, such as areas of missing print, or missing characters, are less likely to occur. In particular, a printed layer 50 with a low dot density is less likely to have missing characters. In addition, variation in the thickness of the printed layer 50 caused by foreign matter is suppressed. Therefore, according to the packaged article 500, a good print appearance can be achieved even when a laminate 100 including the substrate 11 containing recycled resin is used. In addition, since the laminate 100 can have improved quality, the packaged article 500 including the packaging bag 400 obtained using the packaging material laminate 100 can have improved properties, such as increased strength.

(Contents)

The contents C are not particularly limited and may be appropriately selected depending on the application of the packaging bag 400. The contents C are not particularly limited, and examples of the contents C include food, shampoo, rinse, body soap, and detergent.

(Packaging Bag)

The pair of laminates 100 constituting the packaging bag 400 may have the same or different configurations.

The packaging bag 400 may have a half-cut line, and may further have a portion processed to facilitate opening at both ends or one end of the half-cut line. Examples of the portion processed to facilitate opening include score lines and V-, U-, and I-shaped notches.

At the bonded portion of the packaging bag 400, the sealing layers 30 of the pair of laminates 100 may be directly bonded by heat sealing (see Fig. 4), or may be bonded using an adhesive.

(Method of Manufacturing Packaged Article)

Next, an example of a method of manufacturing the packaged article 500 using the laminate 100 will be described.

First, a pair of laminates 100 is prepared. Then, after making the sealing layers 30 of the pair of laminates 100 face each other, the sealing layers 30 are bonded to each other. At this time, the peripheral edges of the laminates are partially bonded to form a U-shaped bonded portion and a portion that is not bonded (unbonded portion). Thus, a packaging bag having an opening formed by the unbonded portion is obtained.

Next, the contents C are filled into the packaging bag through the opening. After that, the sealing layers 30 of the laminates 100 are also bonded along the remaining unbonded portion, thereby turning the unbonded portion into a bonded portion. Thus, the packaged article 500 including the packaging bag 400 and the contents C contained therein can be manufactured.

Preferred embodiments of the present disclosure have been described so far, but the present disclosure should not be limited to the embodiments described above. For example, in the packaged article 500 shown in Fig. 4, the packaging bag 400 is formed using a pair of laminates 100, but the packaging bag may also be manufactured by folding a single laminate 100 with the sealing layer 30 on the inside and bonding overlapping peripheral portions together.

In the packaged article 500 shown in Fig. 4, the packaging bag 400 may be a standing pouch-shaped packaging bag, a two-sided bag, a three-sided bag, a four-sided bag, a fin seal bag, or a gusset bag. The packaging bag 400 may have a synthetic resin fastener that enables resealing by a spout or a strip-shaped protrusion and a strip-shaped groove that can engage with each other.

In addition, in the above embodiments, the packaging container is configured as a packaging bag, but it may also be a tube container. When the packaging container is a tube container, the laminate 100 includes the second sealant layer 40 bonded to the outer layer substrate 10.

Embodiments of the present disclosure have been described above, and the outline of the present disclosure is as follows.

[1] A print substrate formed by forming a printed layer on a substrate, in which
the substrate is a polyolefin resin film containing recycled resin, and the recycled resin is a chemically recycled resin.
[2] A packaging material laminate including the print substrate according to [1] and a sealing layer.
[3] The packaging material laminate according to [2], in which the content of the recycled resin in the packaging material laminate is 10% or more by volume or by mass.
[4] The packaging material laminate according to [2] or [3], further including an intermediate substrate between the substrate and the sealing layer.
[5] The packaging material laminate according to any one of [2] to [4], in which the recycled resin is a post-consumer recycled resin.
[6] The packaging material laminate according to any one of [2] to [5], in which the sealing layer includes a sealant film or a heat-sealing varnish layer.
[7] The laminate according to [4], in which the substrate and the intermediate substrate are bonded together with a solvent-free adhesive.
[8] The packaging material laminate according to [4], in which the substrate or the intermediate substrate further includes a gas barrier layer.
[9] A packaging container obtained using the packaging material laminate according to any one of [2] to [8].
[10] A packaged article including the packaging container according to [9], and
contents contained in the packaging container.

Examples

The present disclosure will be described more specifically with reference to the following Examples; however, the present disclosure is not limited to these Examples.

(Example 1)

A chemically recycled low-density polyethylene (100% PCR ChemR-LDPE) film (thickness 35 μm) was prepared as the substrate, using used packaging materials, and a petroleum-derived low-density polyethylene (petroleum-derived LDPE) film (thickness 60 μm) was prepared as the sealant film, which is the sealing layer. Note that "100% PCR ChemR-LDPE" means that the content of the chemically recycled post-consumer resin (PCR ChemR) in the substrate is 100% by volume (100% by mass).

After forming a printed layer on one surface of the substrate using an aqueous flexographic ink to obtain a print substrate, an adhesive for dry lamination (urethane-based adhesive) was applied to the surface of the printed layer to form an adhesive layer having a thickness of 3 $\mu$m (dry film thickness). A sealant layer was then bonded to the adhesive layer to produce a packaging material laminate (print substrate (substrate/printed layer)/adhesive layer/sealing layer).

(Example 2)

A packaging material laminate (printed layer/substrate/adhesive layer/sealing layer) was produced in the same manner as in Example 1, except that the substrate was changed from the 100% PCR ChemR-LDPE film (thickness 35 $\mu$m) to another 100% PCR ChemR-LDPE film (thickness 25 $\mu$m), the sealant film as the sealing layer was changed from the petroleum-derived LDPE film (thickness 60 $\mu$m) to a biomass-derived low-density polyethylene (biomass-derived LDPE) film (thickness 60 $\mu$m), the adhesive for dry lamination (urethane-based adhesive) was changed to a 1.5 $\mu$m-thick solvent-free adhesive (polyester-based), and the printed layer was provided on the outer side (the side opposite the sealing layer with respect to the substrate).

(Example 3)

A 100% PCR ChemR-LDPE film (thickness 25 $\mu$m) was prepared as the substrate, a 100% PCR ChemR-LDPE film (thickness 25 $\mu$m) was prepared as the intermediate substrate, and a petroleum-derived LDPE film (thickness 60 $\mu$m) was prepared as the sealant film, which is the sealing layer.

After forming a printed layer on one surface of the substrate using an aqueous flexographic ink, an adhesive for dry lamination (urethane-based adhesive) was applied to the surface of the printed layer to form a first adhesive layer having a thickness of 3 $\mu$m (dry film thickness), and the intermediate substrate was bonded to the first adhesive layer.

Subsequently, an adhesive for dry lamination (urethane-based adhesive) was applied to the surface of the intermediate substrate to form a second adhesive layer having a thickness of 3 $\mu$m (dry film thickness), and a sealing layer was then bonded to the second adhesive layer to produce a packaging material laminate (substrate/printed layer/first adhesive layer/intermediate substrate/second adhesive layer/sealing layer).

(Example 4)

A chemically recycled low-density polyethylene (100% PCR ChemR-LDPE) film (thickness 35 $\mu$m) was prepared as the substrate, using used packaging materials. Note that "100% PCR ChemR-LDPE" means that the content of the chemically recycled post-consumer resin (PCR ChemR) in the substrate is 100% by volume (100% by mass).

After forming a printed layer on one surface of the substrate using an aqueous flexographic ink, a polyolefin-based heat-sealing varnish was applied to the surface of the printed layer and dried to form a sealing layer (thickness 1 $\mu$m), thereby producing a packaging material laminate (substrate/printed layer/sealing layer). In this example, an aqueous polyolefin dispersion (CHEMIPEARL S manufactured by Mitsui Chemicals, Inc.) was used as the polyolefin-based heat-sealing varnish.

(Example 5)

A packaging material laminate (substrate/printed layer/first adhesive layer/intermediate layer/second adhesive layer/sealing layer) was produced in the same manner as in Example 3, except that the substrate was changed from the 100% PCR ChemR-LDPE film (thickness 25 $\mu$m) to a 100% PCR ChemR-HDPE film (thickness 25 $\mu$m), the intermediate substrate was changed from the 100% PCR ChemR-LDPE film (thickness 25 $\mu$m) to a petroleum-derived LDPE film (thickness 25 $\mu$m), and the sealant film as the sealing layer was changed from the petroleum-derived LDPE film (thickness 60 $\mu$m) to a petroleum-derived LDPE (thickness 50 $\mu$m).

(Example 6)

A packaging material laminate (substrate/printed layer/first adhesive layer/intermediate substrate/second adhesive layer/sealant layer) was produced in the same manner as in Example 5, except that the substrate was changed from the 100% PCR ChemR-HDPE film (thickness 25 $\mu$m) to a laminated film obtained by coextrusion of three layers: a 100% PCR ChemR-stretched HDPE film (thickness 15 $\mu$m), a petroleum-derived stretched MDPE film (thickness 15 $\mu$m), and a 100% PCR ChemR-stretched HDPE film (thickness 15 $\mu$m).

(Example 7)

A 100% PCR ChemR-OPP film (thickness 25 $\mu$m) was prepared as the substrate, a laminated film was prepared by sequentially forming a vapor-deposited $SiO_x$ layer (thickness 10 nm) and an overcoat layer (thickness 0.3 $\mu$m) on the 100% PCR ChemR-OPP film (thickness 25 $\mu$m) as the intermediate substrate, and a petroleum-derived CPP film (thickness 60 $\mu$m) was prepared as the sealing layer. To prepare the overcoat layer, 10.4 g of tetraethoxysilane $[Si(OC_2H_5)_4$: hereinafter referred to as "TEOS"] was mixed with 89.6 g of hydrochloric acid (0.1 N) and stirred for 30 minutes to obtain a hydrolyzed solution (solution A) with a solid content of 3 wt% (calculated as $SiO_2$). The solution A was mixed with a 3.0 wt% water/isopropyl alcohol solution (with a weight ratio of water to isopropyl alcohol of 90:10) (solution B) of polyvinyl alcohol at a mixing ratio (weight ratio) of 60/40 (solution A/solution B) to obtain a coating agent, which was then applied with a bar coater and dried in a dryer at 120°C for 1 minute, thereby obtaining the overcoat layer.

After forming a printed layer on one surface of the substrate using an aqueous flexographic ink, an adhesive for dry lamination (urethane-based adhesive) was applied to the surface of the printed layer to form a first adhesive layer having a thickness of 3 $\mu$m (dry film thickness), and the laminated film was bonded via the first adhesive layer, with the overcoat layer facing the first adhesive layer. Subsequently, an adhesive for dry lamination (urethane-based adhesive) was applied to the surface of the laminated film to form a second adhesive layer having a thickness of 3 $\mu$m (dry film thickness), and a sealing layer was then bonded to the second adhesive layer to produce a packaging material laminate (substrate/printed layer/first adhesive layer/laminated film (intermediate substrate)/second adhesive layer/sealing layer).

(Example 8)

A packaging material laminate (substrate/printed layer/first adhesive layer/laminated film (intermediate substrate)/second adhesive layer/sealing layer) was prepared in the same manner as in Example 7, except that the sealing layer was changed from the petroleum-derived CPP film (thickness 60 $\mu$m) to a petroleum-derived LDPE film (thickness 60 $\mu$m).

(Comparative Example 1)

A mechanically recycled low-density polyethylene (100% PCRMR-LDPE) film (thickness 25 $\mu$m) was prepared as the substrate, using used polyethylene bags, and a petroleum-derived LDPE film (thickness 60 $\mu$m) was prepared as the sealant film, which was the sealing layer. Note that "100% PCRMR-LDPE" means that the content of the mechanically recycled post-consumer resin (PCRMR) in the substrate is 100% by volume (100% by mass).

After forming a printed layer on one surface of the substrate using an aqueous flexographic ink, an adhesive for dry lamination (urethane-based adhesive) was applied to the surface of the printed layer to form an adhesive layer having a thickness of 3 $\mu$m (dry film thickness). A sealing layer was then bonded to the adhesive layer to produce a packaging material laminate (substrate/printed layer/adhesive layer/sealing layer).

(Comparative Example 2)

A packaging material laminate was produced in the same manner as in Comparative Example 1, except that the substrate was changed from the PCRMR 100%-LDPE film (thickness 20 $\mu$m) to a low-density polyethylene (40% PCRMR-LDPE) film (thickness 60 $\mu$m) obtained by washing used polyethylene bags and mixing mechanically recycled low-density polyethylene (PCRMR-LDPE) pellets from them with petroleum-derived LDPE pellets at a ratio of 40:60 (mass ratio), and the sealing layer was changed from the petroleum-derived LDPE film (thickness 60 $\mu$m) to a petroleum-derived LDPE film (thickness 50 $\mu$m).

Note that "40% PCRMR-LDPE" means that the content of the mechanically recycled post-consumer resin (PCRMR) in the substrate is 40% by mass. In addition, in this case, the volume of a layer formed using a recycled material can be calculated taking into account the densities of the mixed resins, and the film thickness ratio can be calculated using this. Note that the mixed resins have the same density, and % by mass = % by volume.

The 40% PCRMR-LDPE film used as the substrate had a low density (0.920 g/cm$^3$).

(Comparative Example 3)

A 100% PCRMR-LDPE film (thickness 25 $\mu$m) was prepared as the substrate, a 100% PCRMR-LDPE film (thickness 25 $\mu$m) was prepared as the intermediate substrate, and a petroleum-derived LDPE film (thickness 60 $\mu$m) was prepared as the sealing layer.

After forming a printed layer on one surface of the substrate using an aqueous flexographic ink, an adhesive for dry lamination (urethane-based adhesive) was applied to the surface of the printed layer to form a first adhesive layer having a thickness of 3 $\mu$m (dry film thickness), and the intermediate substrate was bonded to the first adhesive layer. Subsequently, an adhesive for dry lamination (urethane-based adhesive) was applied to the surface of the intermediate substrate to form a second adhesive layer having a thickness of 3 $\mu$m (dry film thickness), and a sealing layer was then bonded to the second adhesive layer to produce a packaging material laminate (substrate/printed layer/first adhesive layer/intermediate substrate/second adhesive layer/sealing layer).

(Comparative Example 4)

A packaging material laminate (substrate/printed layer/adhesive layer/sealing layer) was produced in the same manner as in Comparative Example 1, except that the substrate was changed from the 100% PCRMR-LDPE film (thickness 25 μm) to a mechanically recycled linear low-density polyethylene (100% PCRMR-LLDPE) film (thickness 35 μm) using used polyethylene bags.

(Comparative Example 5)

A mechanically recycled low-density polyethylene (100% PCRMR-HDPE-LLDPE) film (thickness 25 μm) was prepared as the substrate, using used packaging materials (high-density polyethylene (HDPE) layer/printed layer/HDPE layer/LLDPE sealant layer), and a petroleum-derived LDPE film (thickness 60 μm) was prepared as the sealing layer. Note that "100% PCRMR-HDPE-LLDPE" means that the total content of mechanically recycled high-density polyethylene (HDPE) and linear low-density polyethylene (LLDPE) in the substrate is 100% by volume (100% by mass).
After forming a printed layer on one surface of the substrate using an aqueous flexographic ink, an adhesive for dry lamination (urethane-based adhesive) was applied to the printed surface to form an adhesive layer having a thickness of 3 μm (dry film thickness). A sealing layer was then bonded to the adhesive layer to produce a packaging material laminate (substrate/printed layer/adhesive layer/sealing layer).

(Comparative Example 6)

A low-density polyethylene (40% PCRMR-LDPE) film (thickness 60 μm) obtained by washing used polyethylene bags and mixing mechanically recycled low-density polyethylene (PCRMR-LDPE) pellets from them with petroleum-derived LDPE pellets at a ratio of 40:60 (mass ratio) was prepared as the substrate, a petroleum-derived LDPE film (thickness 35 μm) was prepared as the intermediate substrate, and a petroleum-derived LDPE film (thickness 60 μm) was prepared as the sealing layer.
Further, after forming a printed layer on one surface of the substrate using an aqueous flexographic ink, an adhesive for dry lamination (urethane-based adhesive) was applied to the surface of the printed layer to form a first adhesive layer having a thickness of 3 μm (dry film thickness), and the intermediate substrate was bonded to the first adhesive layer. Subsequently, an adhesive for dry lamination (urethane-based adhesive) was applied to the surface of the intermediate substrate to form a second adhesive layer having a thickness of 3 μm (dry film thickness), and a sealing layer was then bonded to the second adhesive layer to produce a packaging material laminate (substrate/printed layer/first adhesive layer/intermediate substrate/second adhesive layer/sealing layer).
Note that "40% PCRMR-LDPE" means that the content of the mechanically recycled post-consumer resin (PCRMR) in the substrate is 40% by mass. In addition, in this case, the volume of a layer formed using a recycled material can be calculated taking into account the densities of the mixed resins, and the film thickness ratio can be calculated using this. Note that the mixed resins have the same density, and % by mass was equivalent to % by volume.
The 40% PCRMR-LDPE film used as the substrate had a low density (0.920 g/cm$^3$).

(Reference Example 1)

A petroleum-derived LDPE film (thickness 25 μm) was prepared as the substrate, and a petroleum-derived LDPE film (thickness 60 μm) was prepared as the sealing layer.
After forming a printed layer on one surface of the substrate using an aqueous flexographic ink, an adhesive for dry lamination (urethane-based adhesive) was applied to the printed surface to form an adhesive layer having a thickness of 3 μm (dry film thickness). A sealing layer was then bonded to the adhesive layer to produce a packaging material laminate.

<Recycled Resin Content>

For each of the packaging material laminates of the Examples, Comparative Examples and Reference Examples prepared as described above, the recycled resin content in the packaging material laminate was calculated based on the following formula.

Recycled resin content

= 100 × total thickness of layers containing recycled resins / total thickness of packaging material

laminate

Note that, when a layer containing recycled resin also contained a petroleum-derived resin, the value obtained by multiplying the thickness of this layer by the content (% by mass) of the recycled resin in the layer was used as the thickness of the layer containing the recycled resin.

In addition, since the thicknesses of the printed layer, the vapor-deposited layer, and the overcoat layer are quite small, they were not taken into consideration in the determination of the recycled resin content in the laminate.

<Evaluation>

The packaging material laminate of the Examples, Comparative Examples, and Reference Examples prepared as described above were subjected to Evaluation 1 (occurrence of odor components), Evaluation 2 (fisheyes), Evaluation 3 (impurities), Evaluation 4 (variation in dynamic friction force), and Evaluation 5 (printability) as described below. Here, Evaluation 1 is an evaluation regarding quality, and Evaluations 2 and 3 are evaluations regarding hygiene.

(1) Evaluation 1 (occurrence of odor components)

First, each packaging material laminate was analyzed by purge-and-trap gas chromatography-mass spectrometry. Specifically, a total ion chromatogram was obtained by cutting out a 1.0 g sample from the packaging material laminate, placing this sample in a 20 mL vial together with a collector for odor components, heating it at 60°C for 1 hour to adsorb volatile components from the sample onto the collector, and then analyzing the volatile components adsorbed onto the collector using a purge-and-trap gas chromatograph mass analyzer.

Next, in the total ion chromatogram obtained as described above, the ratio R1 of the peak area of nonanal to the sum of the peak area values of all aliphatic hydrocarbon components, and the ratio R2 of the peak area of decanal to the sum of the peak area values of all aliphatic hydrocarbon components were calculated as odor component indicators.

The evaluation was carried out based on the following evaluation criteria. Tables 1 to 3 show the results.

(Evaluation Criteria)

Excellent: R1 is less than 1.5% and R2 is less than 0.35%.
Good: R1 is less than 1.5% and R2 is 0.35% or more, or
R1 is 1.5% or more and R2 is less than 0.35%.
Poor: R1 is 1.5% or more and R2 is 0.35% or more.

(2) Evaluation 2 (fisheyes)

A sample measuring 1 m x 1 m was cut out from the packaging material laminate, and the sample was placed on a black table with the sealing layer side down. The sample was visually observed to count the number N1 of protrusions (protruding pieces of foreign matter) with a diameter of 0.5 mm or more and less than 1 mm as fisheyes 1, and a number N2 of protrusions (protruding pieces of foreign matter) with a diameter of 1 mm or more as fisheyes 2, and then evaluated based on the following evaluation criteria. Tables 1 to 3 show the results.

(Evaluation Criteria)

Excellent: N1 is 10 or less and N2 is 0.
Good: N1 is 11 to 99 and N2 is 0.
Poor: N1 is 100 or more and N2 is 1 or more.

(3) Evaluation 3 (impurities)

Each packaging material laminate was analyzed by Fourier transform infrared spectroscopy (FT-IR) using attenuated total reflection (ATR), thereby obtaining an ATR spectrum. A diamond prism was used as the prism to be brought into close contact with the packaging material laminate, and the angle of incidence with respect to the surface of the packaging material laminate was 45°.

The ratio R3 of the absorption coefficient of the C=O stretching near 1720 cm$^{-1}$, corresponding to polyester and polyurethane, to the absorption coefficient of the methylene group C-H asymmetric stretching near 2915 cm$^{-1}$, corresponding to polyethylene, in the ATR spectrum was calculated and evaluated based on the following evaluation criteria. Tables 1 to 3 show the results.

(Evaluation Criteria)

Excellent: R3 is less than 0.05.
Good: R3 is 0.05 or more and less than 0.1.
Poor: R3 is 0.1 or more.

(4) Evaluation 4 (variation in dynamic friction force)

For each packaging material laminate, the dynamic friction force was measured using the multi-function static and dynamic friction measuring instrument TL201Tt (manufactured by Trinity Lab) and a tactile probe.

Specifically, the packaging material laminate was placed on a test table with the sealant layer facing down, and the tactile probe was brought into contact with the packaging material laminate (substrate side) and slid at a speed of 10 mm/sec under a load of 50 g to determine the standard deviation of dynamic friction force. This standard deviation σ of dynamic friction force was used as the variation in dynamic friction force. The evaluation was carried out based on the following evaluation criteria. Tables 1 to 3 show the results.

(Evaluation Criteria)

A: σ is less than 0.35.
B: σ is 0.35 or more and less than 0.45.
C: σ is 0.45 or more.

(4) Evaluation 5 (printing)

The printability of each packaging material laminate was evaluated as follows. Specifically, five samples each measuring 10 cm × 10 cm were cut out from each packaging material laminate, and these samples were placed on a light table and observed using a magnifying glass to check for bright spots as areas where ink was missing. The bright spots were irregular in shape, and irregular bright spots with their narrowest portion measuring 0.4 mm or more were considered to be areas where ink was missing. The number of such bright spots was counted, and the total number of bright spots for the five samples was evaluated based on the following evaluation criteria. Tables 1 to 3 show the results.

(Evaluation Criteria)

A: The number of bright spots is 10 or less.
B: The number of bright spots (areas where ink is missing) is 11 to 99.
C: The number of bright spots (areas where ink is missing) is 100 or more.

[Table 1]

| | Laminate configuration | | | | Evaluation | | | | |
|---|---|---|---|---|---|---|---|---|---|
| | Substrate | Intermediate substrate | Sealing layer | Recycled resin content (% by volume) | Evaluation 1 | Evaluation 2 | Evaluation 3 | Evaluation 4 | Evaluation 5 |
| | | | | | Odor component occurrence | Fisheyes | Impurities | Variation in dynamic friction force | Printability |
| Ex. 1 | 100% PCR ChemR-LDPE 35μm | - | Petroleum-derived LDPE 60 μm | 35.7 | Excellent | Excellent | Excellent | A | A |
| Ex. 2 | 100% PCR ChemR-LDPE 25μm | - | Biomass-derived LDPE 60 μm | 28.9 | Excellent | Excellent | Excellent | A | A |
| Ex. 3 | 100% PCR ChemR-LDPE 25μm | 100% PCR ChemR-LDPE 25μm | Petroleum-derived LDPE 60 μm | 43.1 | Excellent | Excellent | Excellent | A | A |
| Ex. 4 | 100% PCR ChemR-LDPE 35μm | - | Polyolefin-based heat-sealing varnish 1 μm | 97.2 | Excellent | Excellent | Excellent | A | A |
| Ex. 5 | 100% PCR ChemR-HDPE 25μm | Petroleum-derived LDPE 25μm | Petroleum-derived LDPE 50 μm | 23.6 | Excellent | Excellent | Excellent | A | A |

[Table 2]

| | Laminate configuration | | | | Evaluation | | | | |
|---|---|---|---|---|---|---|---|---|---|
| | Substrate | Intermediate substrate | Sealing layer | Recycled resin content (% by volume) | Evaluation 1 | Evaluation 2 | Evaluation 3 | Evaluation 4 | Evaluation 5 |
| | | | | | Odor component occurrence | Fisheyes | Impurities | Variation in dynamic friction force | Printability |
| Ex. 6 | 100% PCR ChemR-stretched HDPE (15 μm) Petroleum-derived stretched MDPE (15 μm) 100% PCR ChemR-stretched HDPE (15 μm) | Petroleum-derived LDPE 25 μm | Petroleum-derived LDPE 50 μm | 19.8 | Excellent | Excellent | Excellent | A | A |
| Ex. 7 | 100% PCR ChemR-OPP 25 μm | 100% PCR ChemR-OPP 25 μm | Petroleum-derived CPP 60 μm | 21.5 | Excellent | Excellent | Excellent | A | A |
| Ex. 8 | 100% PCR ChemR-OPP 25 μm | 100% PCR ChemR-OPP 25 μm | Petroleum-derived LDPE 60 μm | 21.5 | Excellent | Excellent | Excellent | A | A |
| Comp. Ex. 1 | 100% PCRMR-LDPE 25 μm | - | Petroleum-derived LDPE 60 μm | 28.4 | Poor | Poor | Poor | C | C |
| Comp. Ex. 2 | 40% PCRMR-LDPE 60 μm | - | Petroleum-derived LDPE 50 μm | 21.2 | Good | Good | Poor | B | B |

[Table 3]

| | Laminate configuration | | | | Evaluation | | | | |
|---|---|---|---|---|---|---|---|---|---|
| | Substrate | Intermediate substrate | Sealing layer | Recycled resin content (% by volume) | Evaluation 1 | Evaluation 2 | Evaluation 3 | Evaluation 4 | Evaluation 5 |
| | | | | | Odor component occurrence | Fisheyes | Impurities | Variation in dynamic friction force | Printability |
| Comp. Ex. 3 | 100% PCRMR-LDPE 25 $\mu$m | 100% PCRMR-LDPE 25 $\mu$m | Petroleum-derived LDPE 60 $\mu$m | 43.1 | Poor | Poor | Good | C | C |
| Comp. Ex. 4 | 100% PCRMR-LLDPE 35 $\mu$m | - | Petroleum-derived LDPE 60 $\mu$m | 35.7 | Poor | Poor | Poor | C | C |
| Comp. Ex. 5 | 100% PCRMR-HDPE-LLDPE 25 $\mu$m | - | Petroleum-derived LDPE 60 $\mu$m | 28.4 | Poor | Poor | Poor | B | C |
| Comp. Ex. 6 | 40% PCRMR-LDPE 60 $\mu$m | Petroleum-derived LDPE 35 $\mu$m | Petroleum-derived LDPE 60 $\mu$m | 14.9 | Good | Good | Poor | B | B |
| Reference 1 | Petroleum-derived LDPE 25 $\mu$m | - | Petroleum-derived LLDPE 60 $\mu$m | 0.0 | Excellent | Excellent | Excellent | A | A |

It can be seen from the results shown in Tables 1 to 3 that, even though the packaging material laminates of Examples 1 to 8 used a substrate containing recycled resin, all of them generated almost no odor components, contained few pieces of foreign matter and impurities such as gels and aggregates, and had a good print appearance, and their properties were close to those of the packaging material laminate of Reference Example 1.

In contrast, as for the packaging material laminates of Comparative Examples 1 to 5 using mechanically recycled resin, when the recycled resin content was 10% by volume or more, at least one of the following occurred: an increased amount of odor components was occurred, an increased number of fisheyes were generated, and an increased amount of impurities was generated. In addition, they did not exhibit good printed appearance, and overall their properties were not similar to those of the packaging material laminate of Reference Example 1.

From the above, it has been confirmed that the packaging material laminate of the present disclosure can achieve a good print appearance even when using a print substrate formed by forming a printed layer on a substrate containing recycled resin.

[Reference Signs List]

10      Print substrate;
11      Substrate;
20      Intermediate substrate;
30      Sealing layer;
50      Printed layer;
60      Gas barrier layer;
100     Laminate;
400     Packaging bag (packaging container);
500     Packaged article; and
C       Contents.

## Claims

1. A print substrate formed by forming a printed layer on a substrate, wherein the substrate is a polyolefin resin film containing recycled resin, and the recycled resin is a chemically recycled resin.

2. A packaging material laminate comprising the print substrate according to claim 1 and a sealing layer.

3. The packaging material laminate according to claim 2, wherein the content of the recycled resin in the packaging material laminate is 10% or more by volume or by mass.

4. The packaging material laminate according to claim 2, further comprising an intermediate substrate between the substrate and the sealing layer.

5. The packaging material laminate according to claim 2, wherein the recycled resin is a post-consumer recycled resin.

6. The packaging material laminate according to claim 2, wherein the sealing layer includes a sealant film or a heat-sealing varnish layer.

7. The laminate according to claim 4, wherein the substrate and the intermediate substrate are bonded together with a solvent-free adhesive.

8. The packaging material laminate according to claim 4, wherein the substrate or the intermediate substrate further includes a gas barrier layer.

9. A packaging container obtained using the packaging material laminate according to any one of claims 2 to 8.

10. A packaged article comprising the packaging container according to claim 9 and contents contained in the packaging container.

FIG.1

FIG.2

FIG.3

FIG.4

## INTERNATIONAL SEARCH REPORT

| International application No. |
| --- |
| **PCT/JP2023/042987** |

| A. | CLASSIFICATION OF SUBJECT MATTER |
| --- | --- |

**B65D 65/40**(2006.01)i; **B32B 27/32**(2006.01)i
FI: B65D65/40 D; B32B27/32 E

According to International Patent Classification (IPC) or to both national classification and IPC

| B. | FIELDS SEARCHED |
| --- | --- |

Minimum documentation searched (classification system followed by classification symbols)

B65D65/40; B32B1/00-43/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2023-48894 A (DAI NIPPON PRINTING CO., LTD.) 07 April 2023 (2023-04-07) claims, paragraphs [0004], [0029], [0047]-[0048], [0050], [0115], [0126], [0153]-[0156], [0164]-[0194], [0204]-[0205], fig. 1-4 | 1-10 |
| Y | JP 2023-1768 A (SEKISUI CHEMICAL CO., LTD.) 06 January 2023 (2023-01-06) paragraphs [0005], [0008], [0021]-[0027], examples, tables 1-2 | 1-10 |
| Y | TW I777888 B (SHUMMI ENTERPRISE CO.,LTD.) 11 September 2022 (2022-09-11) & US 2023/0219731 A1 paragraphs [0006], [0016], [0021]-[0023], [0029]-[0030], [0040]-[0041], fig. 1-2 paragraphs [0009], [0013], [0017]-[0018], [0028]-[0031], fig. 1-2 | 5 |
| A | JP 2023-31593 A (TOPPAN PRINTING CO., LTD.) 09 March 2023 (2023-03-09) entire text, all drawings | 1-10 |
| A | JP 2023-48882 A (DAI NIPPON PRINTING CO., LTD.) 07 April 2023 (2023-04-07) entire text, all drawings | 1-10 |

| ✓ Further documents are listed in the continuation of Box C. | ✓ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **23 January 2024** | **13 February 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**

International application No.

**PCT/JP2023/042987**

C. DOCUMENTS CONSIDERED TO BE RELEVANT

| Category* | Citation of document, with indication, where appropriate, of the relevant passages | Relevant to claim No. |
|---|---|---|
| A | JP 2022-31795 A (DAI NIPPON PRINTING CO., LTD.) 22 February 2022 (2022-02-22) entire text, all drawings | 1-10 |
| A | WO 2019/243348 A1 (SABIC GLOBAL TECHNOLOGIES B.V.) 26 December 2019 (2019-12-26) entire text, all drawings | 1-10 |

Form PCT/ISA/210 (second sheet) (July 2022)

**INTERNATIONAL SEARCH REPORT**
Information on patent family members

International application No.

**PCT/JP2023/042987**

| Patent document cited in search report | | | Publication date (day/month/year) | Patent family member(s) | | | Publication date (day/month/year) |
|---|---|---|---|---|---|---|---|
| JP | 2023-48894 | A | 07 April 2023 | (Family: none) | | | |
| JP | 2023-1768 | A | 06 January 2023 | (Family: none) | | | |
| JP | 2023-31593 | A | 09 March 2023 | WO | 2023/027063 | A1 | |
| JP | 2023-48882 | A | 07 April 2023 | (Family: none) | | | |
| JP | 2022-31795 | A | 22 February 2022 | WO | 2021/100770 | A1 | |
| | | | | EP | 4063116 | A1 | |
| WO | 2019/243348 | A1 | 26 December 2019 | EP | 3810420 | A1 | |

Form PCT/ISA/210 (patent family annex) (July 2022)

**EP 4 707 196 A1**

**Patent documents cited in the description**

- JP 2022552096 T
- JP 2023040660 A